# EUROPÄISCHE PATENTSCHRIFT

(11) **EP 1 332 001 B1**
(45) Veröffentlichungstag und Bekanntmachung des Hinweises auf die Patenterteilung: **28.02.2007**
(21) Anmeldenummer: 01974238.6
(22) Anmeldetag: 11.09.2001
(51) Int. Cl.: B03B 9/06, B07B 9/00, C22B 7/00, B29B 17/02

(54) **ANLAGE UND VERFAHREN ZUR AUFBEREITUNG VON SHREDDER-RÜCKSTÄNDEN UND VERWENDUNG EINER ERZEUGTEN GRANULAT-FRAKTION**
UNIT AND METHOD FOR THE TREATMENT OF SHREDDER RESIDUES AND USE OF GRANULATE FRACTIONS THUS PRODUCED
INSTALLATION ET PROCEDE POUR TRAITER DES RESIDUS DE DECHIQUETAGE ET UTILISATION D'UNE FRACTION DE GRANULAT AINSI PRODUITE

(30) Priorität: 27.10.2000 DE 10053488
(43) Veröffentlichungstag der Anmeldung: 06.08.2003
(60) Teilanmeldung: 06017836.5
(73) Patentinhaber: Volkswagen Aktiengesellschaft, 38436 Wolfsburg (DE)
(72) Erfinder: GOLDMANN, Daniel, 38640 Goslar (DE); DEN DUNNEN, Bram, 38106 Braunschweig (DE); KNUST, Michael, 38550 Isenbüttel (DE)
(86) Internationale Anmeldenummer: PCT/EP2001/010459
(87) Internationale Veröffentlichungsnummer: WO 2002/034400

(56) Entgegenhaltungen:
- EP-A- 0 884 107
- WO-A-00/53324
- WO-A-98/01276
- DE-A- 4 205 309
- DE-A- 19 755 629
- RUDOLPH K-U ET AL: "STAND DER BEHANDLUNG UND VERWERTUNG VON SHREDDERRUECKSTAENDEN AUS ALTAUTOS" MUELL UND ABFALL, SCHMIDT VERLAG, BERLIN, DE, Bd. 29, Nr. 12, 1. Dezember 1997 (1997-12-01), Seiten 745-755, XP000730441 ISSN: 0027-2957

## Beschreibung

Die Erfindung betrifft ein Verfahren zur Aufbereitung von Shredder-Rückständen metallhaltiger Abfälle zum Zwecke der Erzeugung werkstofflich, rohstofflich und energetisch verwertbarer Fraktionen, mit den im Oberbegriff des Anspruchs 1 genannten Merkmalen sowie eine Anlage mit den im Oberbegriff des Anspruchs 18 genannten Merkmalen, mit der die Aufbereitung der Shredder-Rückstände durchgeführt werden kann. Femer betrifft die Erfindung eine Verwendung einer chlor- und metallarmen Granulat-Fraktion nach Anspruch 28, die nach dem erfindungsgemäßen Verfahren separiert wurde.

Das Shreddem von Altfahrzeugen zum Materialaufschluss ist seit langem bekannt. Bei der Durchführung des Shredder-Prozesses haben sich Verfahrensführungen etabliert, bei denen das anfallende Stoffgemisch in verschiedene Fraktionen aufgeteilt wird. So wird zunächst mittels einer geeigneten Absaugvorrichtung eine sogenannte Shredder-Leichtfraktion (SLF) vom anfallenden Stoffgemisch abgetrennt. Die verbleibende Fraktion wird anschließend mit einem Permanent-Magnetscheider in eine ferromagnetische Fraktion (Shredder-Schrott (SS)) und eine nicht-ferromagnetische Fraktion (Shredder-Schwerfraktion (SSF)) aufgetrennt. Der Anteil der metallurgisch vollständig verwertbaren Shredder-Schrott-Fraktion liegt häufig bei zirka 50 bis 75 Gew.%. Die Shredder-Leichtfraktion wurde nach bisherigen Konzepten in der Regel als Abfall deponiert oder in Müllverbrennungsanlagen verbrannt. Sie ist dadurch gekennzeichnet, dass sie sowohl einen hohen Organik- als auch einen hohen Feinkomanteil enthält Die schwere, nicht-flugfähige sowie nicht-ferromagnetische Fraktion - also die Shredder-Schwerfraktion - zeichnet sich durch einen hohen Anteil an Nichteisen-Metallen (NE-Metalle) aus. Zur Wiedergewinnung der verschiedenen NE-Metalle sind spezielle Aufbereitungsanlagen entwickelt worden, bei denen allerdings der verbleibende Rest aus organischen und anorganischen, nicht-metallischen Komponenten in der Regel als Abfall deponiert wird. Unter Shredder-Rückständen sollen nachfolgend alle Stoffströme aus dem Shredderprozess verstanden werden, die nicht direkt am Shredder als metallurgisch direkt verwertbare Produkte abgezogen (Shredder-Schrott) werden können.

Aus der DE 44 37 852 A1 ist ein Verfahren bekannt, bei dem die Shredder-Leichtfraktion, insbesondere zwecks Entfernen von "unerwünschten Bestandteilen", insbesondere Kupfer und Glas, aufbereitet wird. Dabei werden die Shredder-Rückstände in einem Zwangsmischer homogenisiert und mit einem fein- bis feinstkörnigen, eine magnetisierbare Komponente enthaltenen Material vermischt sowie das resultierende Gemisch über einen Magnetscheider geführt. Es hat sich dabei gezeigt, dass die eine metallurgische Verwendung behindernden metallischen Bestandteile der Shredder-Leichtfraktion auf diese Weise abgetrennt werden können.

In der EP 0 863 114 A1 ist vorgesehen, einen dauerplastischen Bergbauversatzstoff zu schaffen, indem der Shredder-Leichtfraktion eine Bindemittelkomponente, ein Füllstoff und eine Salzlösung zugesetzt werden. Dadurch soll ein druckfester, dauerplastischer Körper geschaffen werden.

Aus der DE 197 42 214 C2 ist bekannt, die Shredder-Leichtfraktion weiter zu zerkleinern und einer thermischen Behandlung zu unterziehen. Während oder nach der Zerkleinerung sollen dabei metallische Bestandteile aussortiert werden und das verbleibende Stoffgemisch in einem Schmelzreaktor geschmolzen und durch Abkühlung zu einem "ungefährlichen" Feststoff umgewandelt werden.

Weiterhin offenbart die EP 0 922 749 A1 ein Verfahren zur Aufarbeitung der Shredder-Leichtfraktion, bei dem die Shredder-Leichtfraktion in einen Wirbelschichtvergaser und unter Einbringung von Kalziumkarbonat kalziniert wird.

In einem weiteren thermischen Verfahren sieht die DE 197 31 874 C1 vor, dass die Shredder-Leichtfraktion in einer weiteren Stufe emeut verpresst und dann zerkleinert, homogenisiert und im Wassergehalt reduziert wird, um in einer nachfolgenden Stufe thermisch verwertet zu werden.

In der EP 0 884 107 A2 ist vorgesehen, die Shredder-Leichtfraktion mittels Zerkleinerung, Klassierung und Sortierung in eine metallfreie Fraktion mit einer Zerkleinerungsstufe ≤ 20 mm zu überführen. Die Aufbereitung der Shredder-Leichtfraktion soll zu einer thermisch verwertbaren Fraktion führen.

Neben den aufgezeigten Verwertungsverfahren ist es bekannt, die Shredder-Leichtfraktion einer Vorbehandlung zu unterziehen, bei der ferromagnetische Restfraktionen aus Eisen, V2A-Stahl und Aluminium abgetrennt werden. Ähnliche Verfahren sind auch bei der Aufbereitung der Shredder-Schwerfraktion zum Einsatz gekommen. Darüber hinaus ist es bekannt, von dieser Fraktion Polyolefine abzutrennen.

Zusätzlich befasst sich die DE 197 55 629 A1 mit der Aufbereitung einer Shreddedeichtfraktion in verschiedene Fraktionen, wie Shreddersand, Shreddergranulat, Shredderflusen und Metallgranulat.

Weiterhin ist es bekannt, Kunststoffgranulate durch Waschen von oberflächig anhaftenden Stäuben zu reinigen und das gewaschene Granulat wieder zu trocknen. Ebenfalls Stand der Technik sind Verfahren, bei denen ein Gemisch von Granulaten aus verschiedenen Kunststoffen mit Hilfe von Elektrostatik-Scheidem aufgetrennt wird. Dabei werden Unterschiede der spezifischen elektrischen Aufladbarkeit der Oberflächen der einzelnen Kunststoffmaterialien ausgenutzt. Auf diese Weise lassen sich insbesondere halogenhaltige Granulate, beispielsweise PVC-Granulate, von halogenfreien Granulaten abtrennen.

Den aufgezeigten Verfahren ist gemeinsam, dass sie jeweils nur zur Verarbeitung der Shredder-Leichtfraktion, der Shredder-Schwerfraktion oder eines verunreinigten Granulates aus anderen Quellen ausgelegt sind. Eine gemeinsame Verarbeitung mit dem Ziel einer möglichst weitgehenden Auftrennung der Shredder-Rückstände zu zumindest teilweise verwertbaren Endprodukten, insbesondere rohstofflich verwertbaren Granulat-Fraktionen, ist nicht vorgesehen. Vor dem Hintergrund steigender gesetzlicher Anforderungen (EU-Altautorichtlinie, EU-Verbrennungsrichtlinie und andere) und auch steigender Deponiekosten und Anforderungen an das zu deponierende Gut, ist eine erhöhte Verwertungsquote jedoch wünschenswert. So sieht die Altautoverordnung vom 1. April 1998 vor, dass ab dem Jahre 2015 über 95 Gew.% eines Altautos verwertet werden müssen. Verschärfte Anforderungen aus der im September 2000 verabschiedeten EU-Altautorichtlinie schreiben darüber hinaus vor, den Anteil werkstoff- und rohstofflich nutzbarer Stoffströme auf mindestens 85 Gew.% zu steigem. Eine Verwertung schließt demnach eine bloße energetische Nutzung, zum Beispiel in Müllverbrennungsanlagen, aus. Für einen möglichen rohstofflichen Einsatz der anfallenden Granulat-Fraktion als Reduktionsmittel in einem Hochofenprozess muss insbesondere sichergestellt sein, dass störende Schwermetalle und chlorhaltige Granulate weitestgehend entfernt werden.

Zusätzlich wird in der WO 00/053324 eine Anlage und ein Verfahren für die Verwertung von Shredderabfällen vorgeschlagen, deren Kern der Einsatz einer Rotorprallmühle ist, in welcher sowohl die Shredder-Schwerabfälle als auch die Shredderleichtabfälle zerkleinert werden. Um in einer einstufigen Hauptzerkleinerung einen ausreichenden Aufschluss aller Bestandteile zu erreichen, ist eine massive Krafteinwirkung auf die Partikel notwendig. Hierdurch kann es zu einer eigentlich ungewollten Imprägnation oder einem Einpressen etwa von duktilen Kupferlitzen in Hartkunststoffpartikeln kommen. Passiert dies, lassen sich keine metallarmen Kunststoff-Fraktionen mehr gewinnen. Des Weiteren zielt das Verfahren im Wesentlichen nur darauf ab, dass Metallbestandteile abgetrennt werden.

Der Erfindung liegt daher die Aufgabe zugrunde, ein Verfahren und die dazu notwendige Anlage zur Verfügung zu stellen, mit denen Shredder-Rückstände verarbeitet werden können und in einem mechanischen Aufbereitungsprozess neben weiteren Endprodukten insbesondere mindestens eine qualitativ hochwertige und rohstofflich verwertbare Granulat-Fraktion erzeugbar ist.

Erfindungsgemäß wird diese Aufgabe durch ein Verfahren zur Aufbereitung von Shredder-Rückständen metallhaltiger Abfälle, insbesondere von Karossen, mit den im Anspruch 1 genannten Merkmalen, eine Anlage zur Aufbereitung von Shredder-Rückständen mit den im Anspruch 18 genannten Merkmalen sowie die Verwendung einer nach dem erfindungsgemäßen Verfahren hergestellten Granulat-Fraktion mit den im Anspruch 28 genannten Merkmalen gelöst.

Das Verfahren zeichnet sich insbesondere dadurch aus, dass
(a) während der Aufbereitung der Shredder-Leichtfraktion und der Shredder-Schwerfraktion in Vorprozessen und einem gemeinsamen Hauptprozess eine Rohgranulat-Fraktion durch Abscheidung von wenigstens einer ferromagnetischen Fraktion, einer Nichteisen-Metall-haltigen Fraktion, einer Flusen-Fraktion und einer Sand-Fraktion erzeugt wird und
(b) von der Rohgranulat-Fraktion in einem Veredelungsprozess eine chlor- und metallarme Granulat-Fraktion abgetrennt wird.

Die chlor- und metallarme Granulat-Fraktion wird vorzugsweise durch die aufeinander folgenden Prozessschritte Oberflächenreinigung, Trocknung und elektrostatische Trennung in eine chlorangereicherte Granulat-Fraktion, eine chlor- und metallarme Granulat-Fraktion und eine schwermetallangereicherte Schlamm-Fraktion aufgetrennt.

Damit ist es möglich, aus den Shredder-Rückständen hochwertige und rohstofflich verwertbare Fraktionen, insbesondere eine chlor- und metallarme Granulat-Fraktion, zu separieren. Letztgenannte Fraktion kann zum Beispiel Verwendung als Reduktionsmittel für den Hochofenprozess bei der Stahlerzeugung finden. Die bereitzustellende Granulat-Fraktion weist mindestens folgende weitere Charakteristika auf:
- einen Heizwert von > 20 MJ/kg
- einen CI-Gehalt < 1,5 Gew.%
- einen Zn-Gehalt < 0,5 Gew.%
- einen Cu-Gehalt < 0,2 Gew.%
- einen Pb-Gehalt < 0,1 Gew.%
- einen Cd-Gehalt < 0,02 Gew.%.

Erst durch die weitestgehende Entfernung der störenden Metall- und Chloranteile ist es möglich, Granulat-Fraktionen aus Shredder-Rückständen wirtschaftlich sinnvoll in rohstoffliche Verwertungsprozesse zu integrieren. Chlorarm bzw. metallarm bedeutet, dass entweder die obigen Grenzen eingehalten sind und/oder in diesem Granulat gegenüber dem Rohgranulat mindestens 50 Gew.%, insbesondere 70 Gew.% weniger Chlor bzw. Metall enthalten ist.

Als Endprodukte werden damit mindestens eine hochwertige Granulat-Fraktion, eine ferromagnetische Fraktion, eine Nichteisen-Metall-haltige Fraktion, eine Flusen-Fraktion und eine Sand-Fraktion erzeugt.

Aus der Shredder-Leichtfraktion werden vorzugsweise in einer Vorbehandlung aufgeschlossene Fe-, V2A- und Al-Anteile abgetrennt. Vorzugsweise wird diese Shredder-Leichtfraktion
- in einem ersten Zerkleinerungsaggregat aufgeschlossen,
- anschließend mittels wenigstens eines Magnetscheiders in mindestens eine ferromagnetische Fraktion und eine nicht-ferromagnetische Fraktion aufgetrennt,
- in einem zweiten Zerkleinerungsaggregat die nicht-ferromagnetische Fraktion aufgeschlossen,
- von dieser Fraktion mittels wenigstens einer Klassiereinrichtung eine feinkörnige Sand-Fraktion abgetrennt und
- die verbleibende Fraktion in wenigstens einer Dichtetrennungseinrichtung in eine Flusen-Fraktion und eine grobkömige Schwergut-Fraktion aufgetrennt.

Durch die aufgezeigte Vorgehensweise mit dem stufenweisen Aufschluss der Shredder-Leichtfraktion und den zwischengeschalteten Verfahrensschritten zur Trennung der besonders abrasiv wirkenden ferromagnetischen Bestandteile, können die Betriebskosten insbesondere beim zweiten Zerkleinerungsaggregat gering gehalten werden. Zudem können bereits in diesem Punkt der Gesamtprozessführung zur Aufbereitung der Shredder-Rückstände die gewünschten Endprodukte Flusen und Sand abgetrennt werden. Eine weitere bevorzugte Ausführung sieht vor, dass im Vorprozess mittels einer Absaugeinrichtung zusätzlich eine Schaumstoff-Fraktion - im Wesentlichen aus Polyurethan bestehend - abgetrennt wird.

Weiterhin wird die Shredder-Schwerfraktion im Vorprozess vorzugsweise durch wenigstens einen Metallabscheider und wenigstens eine Klassiereinrichtung in wenigstens eine angereicherte, Nichteisen-Metall-haltige Fraktion, eine Schwergut-Fraktion und eine feinkörnige, metallarme Sand-Fraktion getrennt. Zusätzlich ist es denkbar, dass von der Schwergut-Fraktion in wenigstens einer Dichtetrennungseinrichtung eine hochdichte Restfraktion abgetrennt wird. Die Auftrennung der Shredder-Schwerfraktion in verschiedene Stoffströme wird unter dem Gesichtspunkt einer möglichen gemeinschaftlichen Verarbeitung mit den zuvor bei den im Vorprozess der Verarbeitung der Shredder-Leichtfraktion entstehenden Stoffströmen vorgenommen.

Im Hauptprozess werden die Stoffströme aus den Vorprozessen vorzugsweise derart zusammengeführt, dass
- die Sand-Fraktionen zu einer gemeinsamen Sand-Fraktion zusammengefasst werden und
- die Schwergut-Fraktionen zu einer gemeinsamen Schwergut-Fraktion zusammengefasst, mittels eines Zerkleinerungsaggregates aufgeschlossen und über eine Dichtetrennungseinrichtung in die Rohgranulat-Fraktion und in eine angereicherte, Nichteisen-Metall-haltige Fraktion aufgetrennt werden.

In diesem Prozessteilschritt fallen demnach die gewünschten End- beziehungsweise Zwischenprodukte Sand, Rohgranulat und die Nictiteisen-Metall-haltige Fraktion an. Die Nichteisen-Metall-haltigen Fraktionen können dann vorzugsweise in einem gemeinsamen Aufbereitungsschritt mittels geeigneter Verfahrensschritte, zum Beispiel einer Sandflotation und einer optischen Sortierung, zur Abtrennung von Leichtmetall-, Buntmetall- und sonstigen Metall-Fraktionen unterzogen werden. Die bei der Abtrennung anfallenden nicht-metallischen Restfraktionen können je nach Menge und Zusammensetzung an geeigneten Stellen in den Hauptprozess und/oder die Vorprozesse wieder eingespeist werden.

Die durch die aufgezeigten Aufbereitungsprozesse unter anderem bereitgestellte Rohgranulat-Fraktion ist bereits ein homogenes Produkt, dass heißt, flugfähige Bestandteile, Metalle und Sand sind bereits abgetrennt worden. Die Rohgranulat-Fraktion kann aber erst durch die Veredelung von anhaftenden Metallstäuben befreit und in eine chlor- und metallarme Granulat-Fraktion sowie eine chlorangereicherte Granulat-Fraktion aufgeteilt werden. Vorzugsweise erfolgt dabei die Oberflächenreinigung in einem Friktions- und Turbowäscher, der eine besonders gründliche Trennung sicherstellt. Eine abgewaschene Nichteisen-Metall-haltige Schlamm-Fraktion kann isoliert und gegebenenfalls einer separaten, hier nicht näher beschriebenen weiteren Behandlung zugeführt werden.

Die nach der Oberflächenreinigung eingeleitete Trocknung der gewaschenen Rohgranulat-Fraktion erfolgt vorzugsweise in einem Trockenaggregat zumindest bis zu einer Restfeuchte von < 0,2 Gew.%. Der geringe Restfeuchtigkeitsgehalt ist Voraussetzung für das Funktionieren nachfolgender Trennprozesse. Femer ist es bevorzugt, wenn nach der Trocknung eventuell vorhandene Restmetall-Anteile mittels eines Metallabscheiders abgetrennt werden. Die an dieser Stelle anfallenden, Nichteisen-Metall-haltigen Fraktionen können je nach Menge und Zusammensetzung in den Aufbereitungsprozess der Nichteisen-Metall-haltigen Fraktion integriert werden. Die elektrostatische Trennung erfolgt vorzugsweise mittels eines Elektrostatik-Freifallscheiders.

Weitere bevorzugte Ausgestaltungen des Verfahrens ergeben sich aus den übrigen verfahrensabhängigen Unteransprüchen.

Bevorzugte Ausführungsformen der erfindungsgemäßen Anlage ergeben sich aus den abhängigen Ansprüchen 19 bis 27. Hinsichtlich der Vorteile der erfindungsgemäßen Anlage sei insbesondere auf die obigen Ausführungen, das erfindungsgemäße. Verfahren betreffend, verwiesen.

Die Erfindung wird nachfolgend in einem Ausführungsbeispiel anhand der zugehörigen Zeichnungen näher erläutert. Es zeigen:
- Figur 1: eine Übersicht über die im Prozess der Aufbereitung der Shredder-Rückstände zu bestimmten Zeitpunkten entstehenden Endprodukte in einem Fließdiagramm und
- Figur 2: ein schematisches Fließdiagramm für die Prozessführung in den Vorprozessen und im Hauptprozess der Aufbereitung.

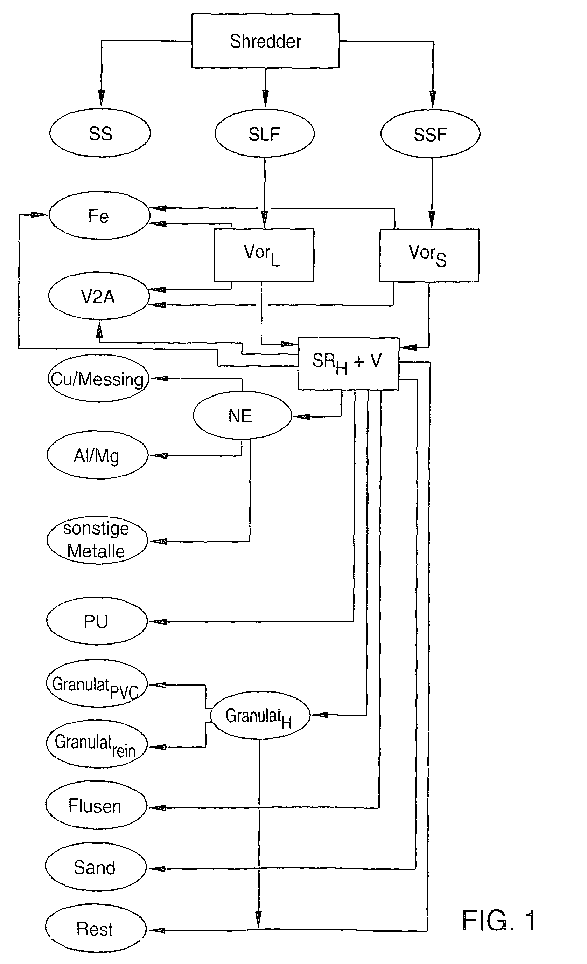

Die Figur 1 zeigt in einem Fließdiagramm, zu welchen Zeitpunkten Endprodukte nach dem erfindungsgemäßen Verfahren während der Aufbereitung der Shredder-Rückstände anfallen. Zunächst werden in einem an sich bekannten vorgeschalteten Shredderprozess in einem Shredder metallhaltige Abfälle, insbesondere von Fahrzeugkarossen, durch einen Zerkleinerungsprozess aufgeschlossen. Im Nachgang erfolgt eine Abtrennung einer flugfähigen Leichtfraktion durch eine Absaugvorrichtung (Shredder-Leichtfraktion SLF). Der nach der Absaugung verbleibende schwere, nicht-flugfähige Stoffstrom wird auf einem Permanent-Magnetscheider in eine ferromagnetische und eine nicht-ferromagnetische Fraktion getrennt. Die ferromagnetische Fraktion wird als Shredder-Schrott SS bezeichnet und stellt das primäre, direkt in der Metallurgie einsetzbare Produkt des Shredders dar. Die schwere, nicht-flugfähige sowie nicht-ferromagnetische Fraktion wird als Shredder-Schwerfraktion SSF bezeichnet. In einem weiteren, hier nicht dargestellten Vorbehandlungsschritt können von der Shredder-Leichtfraktion SLF mittels eines Magnetscheiders noch vorhandene ferromagnetische Bestandteile abgetrennt werden. Der dann verbleibende Stoffstrom der Shredder-Leichtfraktion SLF sowie die Shredder-Schwerfraktion SSF werden nun gemeinschaftlich als Shredder-Rückstände in die gewünschten Endprodukte aufgetrennt.

Die Prozessführung sieht dazu einen Vorprozess Vor_{L} für die Shredder-Leichtfraktion SLF, einen Vorprozess Vor_{S} für die Shredder-Schwerfraktion SSF, einen gemeinsamen Hauptprozess SR_{H} und einen Veredelungsprozess V zur abschließenden Aufarbeitung zumindest eines Teiles der in den Vorprozessen Vor_{L}, Vor_{S} entstehenden primären Stoffströme vor. Als Endprodukte gemäß dem Ausführungsbeispiel entstehen Fraktionen, die überwiegend und mit möglichst hoher Reinheit aus Eisen Fe, Stahl V2A, Flusen, Sand, chlorangereichertem Granulat Granulat_{PVC}, chlor- und metallarmem Granulat GranuLatᵣₑᵢₙ, Schaumstoff PU und einem zu beseitigenden Rest bestehen. Weiterhin kann eine Nichteisen-Metall-haltige Fraktion NE abgetrennt werden, die durch entsprechende Prozessführung wiederum eine Aufteilung in Fraktionen mit Buntmetallen Cu/Messing, Leichtmetallen Al/Mg und sonstige Metalle ermöglicht. Die entstehenden Endprodukte können bis auf die Restfraktion einer metallurgischen, werkstofflichen, rohstofflichen und energetischen Verwertung zugeführt werden. Der Veredelungsprozess V kann insbesondere unter dem Gesichtspunkt der Bereitstellung einer chlor- und metallarmen Granulat-Fraktion- Granulatᵣₑᵢₙ ausgestaltet werden, die zum Beispiel Einsatz als Reduktionsmittel in Hochofenprozessen finden soll. Dazu muss die Granulat-Fraktion Granulatᵣₑᵢₙ mindestens folgende Charakteristika aufweisen:
- einen Heizwert von > 20 MJ/kg
- einen CI-Gehalt < 1,5 Gew.%
- einen Zn-Gehalt < 0,5 Gew.%
- einen Cu-Gehalt < 0,2 Gew.%
- einen Pb-Gehalt < 0,1 Gew.%
- einen Cd-Gehalt < 0,02 Gew.%.

Die nachfolgend geschilderten Prozessschritte ermöglichen insbesondere die Separation einer Granulat-Fraktion Granulatᵣₑᵢₙ aus den heterogenen Shredder-Rückständen, welche der genannten Spezifikation entspricht.

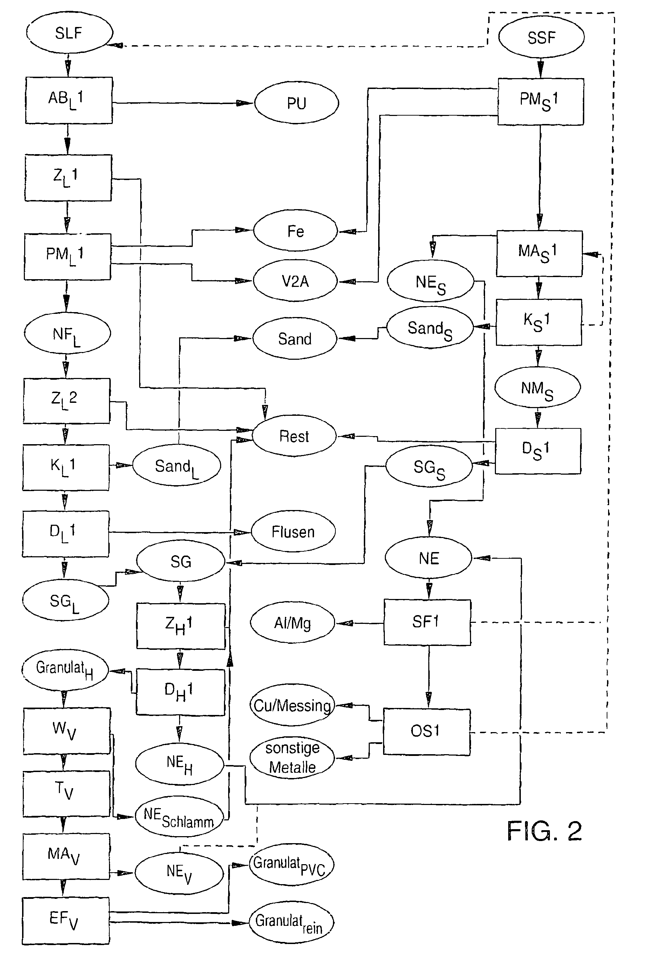

In der Figur 2 sind schematisch wesentliche Komponenten der Anlage zur Aufbereitung der Shredder-Rückstände und die jeweils während der Verfahrensführung an diesen Komponenten anfallenden Zwischen- oder Endprodukte in einem Fließdiagramm dargestellt. Der Übersicht wegen sind die während des Verfahrens erzeugten Endprodukte mittig angeordnet. Der Vorprozess Vor_{L} zur Aufbereitung der Shredder-Leichtfraktion SLF ist schematisch im linken oberen Teil, der Vorprozess Vor_{S} zur Aufbereitung der Shredder-Schwerfraktion SSF im rechten oberen Teil, der Hauptprozess SR_{H} mittig im unteren Teil und der Veredelungsprozess V im linken unteren Teil der Zeichnung dargestellt.

Die Shredder-Schwerfraktion SSF wird zunächst einer zweistufigen Fe- und V2A-Separation mittels eines Permanent-Magnetscheiders PM_{S}1 unterzogen. Nach der Feund V2A-Abscheidung erfolgt eine Klassierung des Reststromes und eine Abscheidung Nichteisen-Metall-haltiger Fraktionen NE_{S}. Dies kann beispielsweise derart erfolgen, dass zunächst eine Klassierung in verschiedene Fraktionen, beispielsweise größer und kleiner 20 mm, erfolgt und diese Fraktion jeweils separat dem Metallabscheider MA_{S}1 zugeführt werden. Denkbar sind selbstverständlich noch zusätzliche Klassierungsstufen. Im Vordergrund steht dabei eine möglichst saubere stoffliche Trennung in die Nichteisen-Metall-haltigen Fraktionen NE_{S} und die verbleibenden metallarmen Fraktionen NM_{S}. Die Klassiereinrichtung K_{S}1 sieht femer vor, dass metallarme Fraktionen NM_{S} mit einem Korndurchmesser vorzugsweise < 6 mm in einer Sand-Fraktion Sand_{S} abgetrennt werden.

Die verbleibende grobkömige metallarme Fraktion NM_{S} wird anschließend mit einer Dichtetrennungseinrichtung D_{S}1 in eine Schwergut-Fraktion SG_{S} sowie eine hochdichte Restfraktion Rest aufgetrennt. Damit soll verhindert werden, dass bei der Weiterbehandlung der Schwergut-Fraktion SG_{S} in nachgeschalteten Zerkleinerungsaggregaten noch hochabrasive und scharfkantige Materialien, wie zum Beispiel Edelstahlkugeln, im Mahlraum vorhanden sind. Zusätzlich kann an dieser Stelle nochmals ein Metallabscheider installiert werden, um letzte verschleißfördernde, massive Metallverunreinigungen abzutrennen. Zusammenfassend liefert der Vorprozess Vor_{S} demnach eine Eisen-Fraktion Fe, eine Stahl-Fraktion V2A, eine Nichteisen-Metallhaltige Fraktion NE_{S}, eine Sand-Fraktion Sand_{S} und eine Schwergut-Fraktion SG_{S}.

Im Vorprozess Vor_{L} wird ausgehend von der Shredder-Leichtfraktion SLF zunächst eine Schaumstoff-Fraktion PU - überwiegend aus dem leicht-flugfähigen Polyurethan bestehend - in der Absaugeinrichtung AB_{L}1 abgetrennt. Die abgetrennten Schaumstoffstücke werden pneumatisch in einen Presscontainer gefördert und dort automatisch verdichtet. Diese Fraktion kann direkt verwertet oder gegebenenfalls einer weiteren, hier nicht weiter ausgeführten Veredelungsstufe zugeführt werden.

Die verbleibende Fraktion wird nun in einem ersten Zerkleinerungsaggregat Z_{L}1 aufgeschlossen, und zwar derart, dass ein Austrag des Aggregats Z_{L}1 Partikel mit einem Durchmesser < 50 mm enthält. Um eine Beanspruchung des Zerkleinerungsaggregats Z_{L}1 möglichst gering zu halten, kann vorgesehen sein, dass eine hier nicht dargestellte Klassiereinrichtung zur Separation und Zuführung einer Fraktion mit einem Durchmesser von > 50 mm vorgeschaltet wird. Von der zerkleinerten Fraktion wird mittels eines Permanent-Magnetscheiders PM_{L}1 eine Eisenfraktion Fe und eine Stahlfraktion V2A abgetrennt. Die verbleibende nicht-ferromagnetische Fraktion NF_{L} wird nun einem zweiten Zerkleinerungsaggregat Z_{L}2 zugeführt, in dem ein weiterer Aufschluss des Materials erfolgt. Ein Austrag des Zerkleinerungsaggregates Z_{L}2 wird dabei mit < 10 mm ausgelegt. Auch hier kann über eine nicht dargestellte Klassiereinrichtung die Beschickung des Zerkleinerungsaggregates Z_{L}2 auf eine Fraktion mit einem Durchmesser > 10 mm beschränkt werden.

Von der nun gut aufgeschlossenen nicht-ferromagnetischen Fraktion NF_{L} wird in einer weiteren Klassiereinrichtung K_{L}1 eine feinkörnige Sand-Fraktion Sand_{L} abgetrennt. Eine Korngröße der Sand-Fraktion Sand_{L} wird vorzugsweise auf < 4 mm festgelegt. Die verbleibende Fraktion wird einer Windsichtung und Dichtetrennung in einer entsprechenden Einrichtung D_{L}1 unterzogen. In der Einrichtung D_{L}1 wird eine leichte Fraktion aus Flusen mittels Querstromsichter über eine Schwergutklappe geblasen. Aufgrund der vorherigen Förderung auf einem Vibrationsförderer hat sich das schwerere Material bereits nach unten abgesetzt, so dass die unterliegende Schwerfraktion zwangsläufig nach unten in einen Schwergutaustrag fällt (Schwergut-Fraktion SG_{L}). Zusammengefasst können in dem Vorprozess Vor_{L} die End- und Zwischenprodukte Schaumstoffstücke PU, Eisen Fe, Stahl V2A, Sand_{L} und Schwergut SG_{L} bereitgestellt werden. Die während der Bearbeitung in den Zerkleinerungsaggregaten Z_{L}1 und Z_{L}2 anfallenden schwermetall- und organikhaltigen Stäube und Schlämme werden der Restfraktion Rest zugeführt.

Im Hauptprozess SR_{H} werden zunächst die Sand-Fraktionen Sand_{L}, Sand_{S} zu einer gemeinsamen Sand-Fraktion Sand zusammengefasst. Gegebenenfalls kann diese Fraktion einer weiteren, hier nicht dargestellten Veredelungsstufe zugeführt werden.

Auch die Schwergut-Fraktionen SG_{L} und SG_{S} werden zu einer gemeinsamen Schwergut-Fraktion SG zusammengefasst. Diese wird nachfolgend in einem weiteren Zerkleinerungsaggregat Z_{H}1 erneut aufgeschlossen. Ein Austrag der Zerkleinerungsaggregate Z_{H}1 wird mit < 8 mm ausgelegt. Das Zerkleinerungsaggregat Z_{H}1 ist üblicherweise als Schneidmühle ausgebildet, damit an dieser Stelle ein optimaler Materialaufschluss erreicht wird. Nach der Zerkleinerung erfolgt eine Dichtetrennung auf Luft-Setz-Tischen (Dichtetrennungseinrichtung D_{H}1). Die abgetrennte Leichtfraktion besteht überwiegend aus Kunststoff in granulierter Form. Das Rohgranulat Granulat_{H} wird in dem zusätzlichen Veredelungsprozess V weiter aufgearbeitet. Die verbleibende Schwerfraktion NE_{H} besteht größtenteils aus Nichteisen-Metallen, und zwar überwiegend aus Kupfer-Litzen. Die Fraktion NE_{H} kann daher bereits an dieser Stelle dem Prozess entzogen werden, aber auch mit der Nichteisen-Metall-haltigen Fraktion NEₛ zu einer gemeinsamen Fraktion NE zusammengeführt werden und gemeinsam aufbereitet werden.

Im Veredelungsprozess V erfolgt zunächst eine Oberflächenreinigung mit Wasser in einem Attritionsprozess mittels eines Friktions- und Turbowäschers W_{V}. Hierbei werden schwermetallhaltige, oberflächlich anhaftende Stäube abgewaschen und in einer Schlamm-Fraktion konzentriert. Diese Schlamm-Fraktion NE_{Schlamm} wird einer separaten, hier nicht näher beschriebenen weiteren Behandlung zugeführt. Anschließend erfolgt eine Trocknung des gewaschenen Granulats in einem Trockenaggregat T_{V} bis auf eine Restfeuchte von < 0,2 %. Nach diesem Behandlungsschritt kann optional ein Allmetallseparator MA_{V} vorgesehen sein, mit dem noch letzte, im Granulat enthaltene Metallpartikel, zum Beispiel Kupfer-Litzen, abgetrennt werden können. Diese Restmetall-Fraktion NE_{V} kann wiederum der gemeinschaftlichen NE-Metallaufarbeitung zugeführt werden.

Das so vorbehandelte Granulat wird über einen Förderer in einen Aufgabetrichter eines Elektrostatik-Freifallscheiders EF_{V} aufgegeben. Hier erfolgt zunächst eine elektrostatische (tribo-elektrische) Aufladung der Granalien durch Reibung. Beim Kontakt der Partikel gehen jeweils einige Elektronen pro Kontakt über, so dass sich diese positiv oder negativ aufladen. Das Aufladungsverhalten der verschiedenen Kunststoffe unterscheidet sich gemäß der tribo-elektrischen Aufladungsreihe für Kunststoffe. Innerhalb dieser Aufladungsreihe steht PVC an exponierter Stelle gegenüber einem Großteil der anderen Kunststoffe. Auf diese Weise ist daher eine PVC-Abtrennung möglich (Granulat_{PVC}). Konstruktiv bedingt werden im Freifallscheider EF_{V} die negativ aufgeladenen von den positiv aufgeladenen Partikeln getrennt. Die chlorangereicherte Granulat-Fraktion Granulat_{PVC} weist häufig erhöhte Blei- und Cadmiumwerte auf. Diese beiden Schwermetalle finden häufig Verwendung als Stabitisatoren/Kunststoffzusatzstoffe, insbesondere in PVC. Weiterhin erhält man eine chlor- und metallarme Granulat-Fraktion Granulatᵣₑᵢₙ.

Die Aufbereitung der Nichteisen-Metall-haltigen Fraktion NE kann im Wesentlichen mittels einer Sandftotationsantage SF1 und eines optischen Sortierers OS1 erfolgen. Mit einer Sandflotation ist es möglich, eine Leichtmetall-Fraktion vorwiegend aus Aluminium und Magnesium von einer Schwermetall-Fraktion trockenmechanisch zu trennen. Anzumerken ist, dass der hier verwendete Sand als. Separationsmedium nichts mit der abgetrennten Fraktion "Sand" aus den Shredder-Rückständen zu tun hat. Die Schwermetalle sinken in das Sandbett, während die Leichtmetalle auf dem Sandbett aufschwimmen. Über eine Trennscheide werden ein leichtmetallhaltiger Oberstrom und der mit den Schwermetallen angereicherte Unterstrom getrennt. In einem zur Sandflotation gehörenden Prozessschritt werden die Metallkonzentrate wieder vom Trennmedium Sand getrennt. Die abgetrennte Aluminium- und Magnesium-Fraktion Al/Mg kann gegebenenfalls noch weiter aufgetrennt werden.

Die abgetrennte Schwerfraktion (insbesondere Zink Zn, Kupfer Cu, Messing, Blei Pb sowie eventuell V4A-Stahl) wird durch den optischen Sortierer OS1 in Buntmetalle Kupfer/Messing und sonstige Metalle aufgetrennt. Eventuell hier anfallende nichtmetallische Reste können je nach Menge und Zusammensetzung an geeigneter Stelle, wie beispielsweise hier in den Vorprozess.Vor_{L}, eingespeist werden. Zusammengefasst werden im Hauptprozess SR_{H} mit anschließender Nichteisen-Metall-Aufbereitung eine Al/Mg-Fraktion, eine Cu/Messing-Fraktion, eine Fraktion mit sonstigen Metallen, eine Sand-Fraktion Sand und eine Rohgranulat-Fraktion Granulat_{H} bereitgestellt. Die Rohgranulat-Fraktion Granulat_{H} wird dann im Veredelungsprozess V weiter aufgereinigt, so dass als Endprodukte die chlorangereicherte Granulat-Fraktion Granulat_{PVC} und die chlor- und metallarme Granulat-Fraktion Granulatᵣₑᵢₙ anfallen.

### Bezugszeichenliste

- AB_{L}1: Absaugeinrichtung (Abtrennung Schaumstoff-Fraktion)
- Al/Mg: Leichtmetall-Fraktion
- Cu/Messing: Buntmetall-Fraktion
- D_{H}1, D_{L}1, D_{S}1: Dichtetrennungseinrichtungen
- EF_{V}: Elektrostatik-Freifallscheider
- Fe: Eisen-Fraktion
- Flusen: Flusen-Fraktion
- Granulat_{H}: Rohgranulat-Fraktion
- Granulat_{PVC}: chlorangereicherte Granulat-Fraktion
- Granulatᵣₑᵢₙ: chlor- und metallarme.Granulat-Fraktion
- K1, K_{S}1: Klassiereinrichtungen
- MA_{S}1, MA_{V}: Metallabscheider / Allmetallseparator
- NE, NE_{H}, NE_{L}, NE_{S}, NE_{Schlamm}; NEv: Nichteisen-Metall-haltige Fraktionen
- NF_{L}: nicht-ferromagnetische Fraktion
- NM_{S}: metallarme Fraktion
- OS1: optischer Sortierer
- PM_{L}1, PM_{S}1: Permarierit-Magnetscheider
- PU: Schaumstoff-Fraktion
- Rest: Restfraktion
- Sand, Sand_{L}, Sand_{S}: Sand-Fraktionen
- SF1: Sandflotationsanlage
- SG, SG_{L}, SG_{S}: Schwergut-Fraktionen
- SLF: Shredder-Leichtfraktion
- Sonstige Metalle: Fraktion mit sonstigen Metallen
- SR_{H}: Hauptprozess
- SS: Shredder-Schrott
- SSF: Shredder-Schwerfraktion
- V: Veredelungsprozess für das Granulat
- V2A: Stahl-Fraktion
- Vor_{L}: Vorprozess für die Shredder-Leichtfraktion
- Vor_{S}: Vorprozess für die Shredder-Schwerfraktion
- W_{V}: Friktions- und Turbowäscher
- Z_{L}1, Z_{L}2, Z_{H}1: Zerkleinerungsaggregate

## Patentansprüche

1. Verfahren zur Aufbereitung von Shredder-Rückständen metallhaltiger Abfälle, insbesondere von Fahrzeugkarossen insbesondere Altkarossen und/oder Unfallfahrzeuge, bei dem die Shredder-Rückstande in eine Shredder-Leichtfraktion (SLF) und eine nicht-ferromagnetische Fraktion (Shredder-Schwerfraktion (SSF)) aufgetrennt werden, **dadurch gekennzeichnet, dass**
(a) während der Aufbereitung der Shredder-Leichtfraktion (SLF) und der Shredder-Schwerfraktion (SSF) in Vorprozessen (Vor_{L}, Vor_{S}) und einem gemeinsamen Hauptprozess (SR_{H}) eine Rohgranulat-Fraktion (Granulat_{H}) durch Abscheidung von wenigstens einer ferromagnetischen Fraktion (Fe,V2A), einer Nichteisen-Metall-haltige Fraktion (NE), einer Flusen-Fraktion (Flusen) und einer Sand-Fraktion (Sand) erzeugt wird und
(b) von der Rohgranulat-Fraktion (Granulat_{H}) in einem Veredelungsprozess (V) eine chlor- und metallarme Granulat-Fraktion (Granulatᵣₑᵢₙ) abgetrennt wird.

2. Verfahren nach Anspruch 1, **dadurch gekennzeichnet, dass** die Rohgranulat-Fraktion (Granulat_{H}) in einer elektrostatischen Trennung aufgetrennt wird, der insbesondere eine Oberflächenreinigung und Trocknung des Rohgranulats vorhergeht.

3. Verfahren nach Anspruch 1 oder 2, **dadurch gekennzeichnet, dass** von der Rohgranulat-Fraktion (Granulat_{H}) eine chlor- und insbesondere auch metallarme Granulat-Fraktion (Granulatᵣₑᵢₙ) und vorteilhaft auch eine chlorangereicherte Granulat-Fraktion (Granulat_{PVC}) und/oder eine schwermetallangereicherte (Schlamm-)Fraktion (NE_{Schlamm}) abgetrennt wird.

4. Verfahren nach einem der vorhergehenden Ansprüche, **dadurch gekennzeichnet, dass** die Shredder-Leichtfraktion (SLF) einer weiteren Vorbehandlung mittels eines Magnetscheiders zur Abtrennung einer ferromagnetischen Restfraktion unterworfen wird.

5. Verfahren nach einem der vorhergehenden Ansprüche, **dadurch gekennzeichnet, dass** im Vorprozess (Vor_{L}) ausgehend von der Shredder-Leichtfraktion (SLF) durch Zerkleinerung, Metallabscheidung, Klassierung und/oder Dichtetrennung eine eisenhaltige und/oder ferromagnetische Fraktionen (Fe,V2A), eine feinkörnige Sand-Fraktion (Sand_{L}), eine Flusen-Fraktion (Flusen) und/oder eine grobkörnige Schwergut-Fraktion (SG_{L}) abgetrennt wird, wobei vorzugsweise mindestens zwei, insbesondere mindestens drei dieser Fraktionen und besonders vorteilhaft zumindest die letztgenannte Fraktion erhalten wird.

6. Verfahren nach Anspruch 5, **dadurch gekennzeichnet, dass** von der Shredder-Leichtfraktion (SLF) im Vorprozess (Vor_{L}) insbesondere mittels einer Absaugeinrichtung (AB_{L}1) zusätzlich eine Schaumstoff-Fraktion (PU) abgetrennt wird.

7. Verfahren nach Anspruch 5 oder 6, **dadurch gekennzeichnet, dass** insbesondere durch die Zerkleinerung und/oder die Klassierung mindestens 60 Gew.%, insbesondere mindestens 80 Gew.% der Schwergut-Fraktion (SG_{L}) mit einem Durchmesser von 4 bis 10 mm erhalten werden.

8. Verfahren nach einem der vorhergehenden Ansprüche, **dadurch gekennzeichnet, dass** von der Shredder-Schwerfraktion (SSF) im Vorprozess (Vor_{S}) durch Metallabscheidung, Klassierung und/oder Dichtetrennung mindestens eine Nichteisen-Metall-haltige Fraktion (NE_{S}), eine feinkörnige, metallarme Sand-Fraktion (Sand_{S}), eine hochdichte Restfraktion (Rest) und/oder eine Schwergut-Fraktion (SG_{S}) abgetrennt wird, wobei vorzugsweise mindestens zwei und insbesondere drei dieser Fraktionen und besonders vorteilhaft zumindest die letztgenannte Fraktion erhalten wird.

9. Verfahren nach Anspruch 8, **dadurch gekennzeichnet, dass** durch die Klassierung mindestens 60 Gew.%, insbesondere mindestens 80 Gew.% der Schwergut-Fraktion (SG_{S}) mit einem Durchmesser von > 6 mm erhalten werden.

10. Verfahren nach einem der Ansprüche 5 bis 9, **dadurch gekennzeichnet, dass** im Hauptprozess (SR_{H}) die Schwergut-Fraktion/en (SG_{L}, SG_{S}) mittels eines Zerkleinerungsaggregates (Z_{H}1) aufgeschlossen und über eine Dichtetrennungseinrichtung (D_{H}1) in die Rohgranulat-Fraktion (Granulat_{H}) und/oder in eine angereicherte, Nichteisen-Metall-haltige Fraktion (NE_{H}) aufgetrennt wird/werden.

11. Verfahren nach Anspruch 10, **dadurch gekennzeichnet, dass** ein Austrag des Zerkleinerungsaggregates (Z_{H}1) mit < 8 mm vorgegeben wird.

12. Verfahren nach einem der vorhergehenden Ansprüche, **dadurch gekennzeichnet, dass** eine Oberflächenreinigung der Rohgranulat-Fraktion (Granulat_{H}) erfolgt.

13. Verfahren nach Anspruch 12, **dadurch gekennzeichnet, dass** eine abgewaschene schwermetallangereicherte Schlamm-Fraktion (NE_{Schlamm}) abgetrennt wird.

14. Verfahren nach einem der Ansprüche 2 bis 13, **dadurch gekennzeichnet, dass** die Trocknung des gereinigten Granulats in einem Trockenaggregat (T_{V}) bis zu einer Restfeuchte von < 0,2 Gew.% erfolgt:

15. Verfahren nach Anspruch 14, **dadurch gekennzeichnet, dass** nach der Trocknung eine Restmetall-Fraktion (NE_{V}) mittels eines Metallabscheiders (MA_{V}) abgetrennt wird.

16. Verfahren nach einem der Ansprüche 2 bis 15, **dadurch gekennzeichnet, dass** die elektrostatische Trennung mittels eines Elektrostatik-Scheiders (EF_{V}) erfolgt.

17. Verfahren nach einem der vorhergehenden Ansprüche, **dadurch gekennzeichnet, dass** die bei der Abtrennung im Veredelungsprozess (V) anfallende, Nichteisen-Metall-haltigen Fraktion/en (NEₓ) je nach Menge und Zusammensetzung in einen Aufbereitungsprozess der Nichteisen-Metall-haltigen Fraktion (NE) integriert wird/werden.

18. Anlage zur Aufbereitung von Shredder-Rückständen metallhaltiger Abfälle, insbesondere von Karossen, bestehend aus einer Shredder-Leichtfraktion (SLF) und einer nicht-ferromagnetischen Fraktion (Shredder-Schwerfraktion (SSF)), **dadurch gekennzeichnet, dass** Mittel vorhanden sind, mit denen
(a) während der Aufbereitung der Shredder-Leichtfraktion (SLF) und der Shredder-Schwerfraktion (SSF) in Vorprozessen (Vor_{L}, Vor_{S}) und einem gemeinsamen Hauptprozess (SR_{H}) eine Rohgranulat-Fraktion (Granulat_{H}) durch Abscheidung von wenigstens einer ferromagnetischen Fraktion (Fe/V2A), einer Nichteisen-Metall-haltigen Fraktion (NE), einer Flusen-Fraktion (Flusen) und einer Sand-Fraktion (Sand) erzeugt wird und
(b) von der Rohgranulat-Fraktion (Granulat_{H}) in einem Veredelungsprozess (V), eine chlor- und metallarme Granulat-Fraktion (Granulatᵣₑᵢₙ) abgetrennt wird.

19. Anlage nach Anspruch 18, **dadurch gekennzeichnet, dass** von der Rohgranulat-Fraktion (Granulat_{H}) im Veredelungsprozess durch die aufeinander folgenden Prozessschritte Oberflächenreinigung, Trocknung und elektrostatische Trennung in mindestens eine chlorangereicherte Granulat-Fraktion (Granulat_{PVC}) eine chlor- und metallarme Granulat-Fraktion (Granulatᵣₑᵢₙ) und eine schwermetallangereicherte Schlamm-Fraktion (NE_{Schlamm}) aufgetrennt wird.

20. Anlage nach Anspruch 18 oder 19, **dadurch gekennzeichnet, dass** ein Magnetscheider zur Abtrennung von ferromagnetischen Restfraktionen von der Shredder-Leichtfraktion (SLF) vorhanden ist.

21. Anlage nach einem der Ansprüche 18 bis 20, **dadurch gekennzeichnet, dass** zur Aufarbeitung der vorbehandelten Shredder-Leichtfraktion (SLF) im Vorprozess (Vor_{L}) aufeinander folgend
- ein erstes Zerkteinerungsaggregat (Z_{L}1) zum Aufschluss der Shredder-Leichtfraktion (SLF),
- wenigstens ein Magnetscheider (PM_{L}1) zur Abtrennung mindestens einer ferromagnetischen Fraktion (Fe, V2A) von einer nicht-ferromagnetischen Fraktion (NF_{L}),
- ein zweites Zerkleinerungsaggregat (Z_{L}2) zum Aufschluss der nicht-ferromagnetischen Fraktion (NF_{L}),
- wenigstens eine Klassiereinrichtung (K_{L}1) zur Abtrennung einer feinkörnigen Sand-Fraktion (Sand_{L}) und
- wenigstens eine Dichtetrennungseinrichtung (D_{L}1) zur Auftrennung der verbleibenden Fraktion in die Flusen-Fraktion (Flusen) und eine grobkörnige Schwergut-Fraktion (SG_{L}) vorgesehen sind.

22. Anlage nach Anspruch 21, **dadurch gekennzeichnet, dass** zusätzlich eine Absaugeinrichtung (AB_{L}1) zur Abtrennung einer Schaumstoff-Fraktion (PU) vorgesehen ist.

23. Anlage nach einem der Ansprüche 18 bis 22, **dadurch gekennzeichnet, dass** zur Aufarbeitung der Shredder-Schwerfraktion (SSF) im Vorprozess (Vor_{S}) aufeinander folgend ein Metallabscheider (MA_{S}1) und wenigstens eine Klassiereinrichtung (K_{S}1) zur Abtrennung wenigstens einer angereicherten, Nichteisen-Metall-haltigen Fraktion (NE_{S}), einer Schwergut-Fraktion (SG_{S}) und einer feinkörnigen, metallarmen Sand-Fraktion (Sand_{S}) vorgesehen sind.

24. Anlage nach einem der Ansprüche 18 bis 23, **dadurch gekennzeichnet, dass** zur Aufarbeitung der Stoffströme aus den Vorprozessen (Vor_{L}, Vor_{S}) im Hauptprozess (SR_{H})
- Mittel zur Zusammenfassung der Schwergut-Fraktionen (SG_{L}, SG_{S}) zu einer gemeinsamen Schwergut-Fraktion (SG),
- ein Zerkleinerungsaggregat (Z_{H}1) zum Aufschluss der Schwergut-Fraktion (SG) und
- nachfolgend eine Dichtetrennungseinrichtung (D_{H}1) zur Abtrennung der Rohgranulat-Fraktion (Granulat_{H}) und einer angereicherten, Nichteisen-Metall-haltigen Fraktion (NE_{H}) von der aufgeschlossenen Schwergut-Fraktion (SG) vorgesehen sind.

25. Anlage nach einem der Ansprüche 18 bis 24, **dadurch gekennzeichnet, dass** die Mittel zur Behandlung der Rohgranulat-Fraktion (Granulat_{H}) im Veredelungsprozess (V) mindestens einen Friktions- und Turbowäscher (W_{V}), ein Trockenaggregat (T_{V}) und einen Elektrostatik-Freifallscheiders (EF_{V}) umfassen.

26. Anlage nach Anspruch 25, **dadurch gekennzeichnet, dass** zusätzlich ein Metallabscheider (MA_{V}) vorgesehen ist.

27. Anlage nach Anspruch 26, **dadurch gekennzeichnet, dass** Mittel zur Einspeisung der bei Abtrennung im Veredelungsprozess (V) anfallenden, Nichteisen-Metall-haltigen Fraktion (NE_{V}) in einen Aufbereitungsprozess der Nichteisen-Metall-haltigen Fraktion (NE) vorgesehen sind.

28. Verwendung des Verfahrens zur Aufbereitung von Kunststoffen aus Shredder-Rückständen metallhaltiger Abfälle, insbesondere von Karossen, nach einem der Ansprüche 1 bis 17, **dadurch gekennzeichnet, dass** eine chlor- und insbesondere auch metallarme Granulat-Fraktion (Granulatᵣₑᵢₙ) für eine rohstoffliche Verwertung, zum Beispiel für den Einsatz als Reduktionsmittel im Hochofenprozess, separiert wird.

29. Verwendung nach Anspruch 28, **dadurch gekennzeichnet, dass** die Granulat-Fraktion (Granulatᵣₑᵢₙ) mindestens die ersten beiden der folgenden Charakteristika aufweist:
• einen Heizwert von > 20 MJ/kg
• einen Cl-Gehalt < 1,5 Gew.%
• einen Zn-Gehalt < 0,5 Gew.%
• einen Cu-Gehalt < 0,2 Gew.%
• einen Pb-Gehalt < 0,1 Gew.%
• einen Cd-Gehalt < 0,02 Gew.%.

## Claims

1. Method for reprocessing shredder residues of metal-containing waste, especially vehicle bodies in particular old vehicle bodies and/or vehicles which have been involved in an accident, in which the shredder residues are split into a shredder light fraction (SLF) and a non-ferromagnetic fraction (shredder heavy fraction (SHF)), **characterized in that**
(a) during the reprocessing of the shredder light fraction (SLF) and of the shredder heavy fraction (SHF) in preliminary processes (Pre_{L}, Pre_{H}) and a common main process (SR_{M}), a crude granulate fraction (granulate_{M}) is produced by separation of at least a ferromagnetic fraction (Fe, V2A), a non-ferrous-metal-containing fraction (NF), a fluff fraction (fluff) and a sand fraction (sand), and
(b) a low-chlorine and low-metal granulate fraction (granulateₚᵤᵣₑ) is separated from the crude granulate fraction (granulate_{M}) in a refining process (R).

2. Method according to Claim 1, **characterized in that** the crude granulate fraction (granulate_{M}) is separated in an electrostatic separation which precedes, in particular, surface cleaning and drying of the crude granulate.

3. Method according to Claim 1 or 2, **characterized in that** a low-chlorine and, in particular, also low-metal granulate fraction (granulateₚᵤᵣₑ) and advantageously also a chlorine-enriched granulate fraction (granulate_{PVC}) and/or a heavy-metal-enriched (slurry) fraction (NF_{slurry}) are separated from the crude granulate fraction (granulate_{M}).

4. Method according to one of the preceding claims, **characterized in that** the shredder light fraction (SLF) is subjected to a further pre-treatment by means of a magnetic separator for the separation of ferromagnetic residual fractions.

5. Method according, to one of the preceding claims, **characterized in that** in the preliminary process (Pre_{L}), starting from the shredder light fraction (SLF), by crushing, metal separation, classification and/or density separation, an iron-containing and/or ferromagnetic fraction (Fe, V2A), a fine-grained sand fraction (sand_{L}), a fluff fraction (fluff) and/or a coarse-grained heavy material fraction (HM_{L}) are/is separated, preferably at least two, in particular at least three of these fractions and particularly advantageously the last-mentioned fraction being obtained.

6. Method according to Claim 5, **characterized in that** from the shredder light fraction (SLF), in the preliminary process (Pre_{L}), a foamed plastic fraction (PU) is separated in particular by means of a suction device (SU_{L}1).

7. Method according to Claim 5 or 6, **characterized in that**, in particular as a result of the crushing and/or the classification, at least 60% by weight, in particular at least 80% by weight of the heavy material fraction (HM_{L}) is obtained with a diameter of from 4 to 10 mm.

8. Method according to one of the preceding claims, **characterized in that** from the shredder heavy fraction (SHF), in the preliminary process (Pre_{H}), at least a non-ferrous-metal-containing fraction (NF_{H}), a fine-grained, low-metal sand fraction (Sand_{H}), a high-density residual fraction (Res) and/or a heavy material fraction (HM_{H}) are separated by metal separation, classification and/or density separation, preferably at least two and, in particular, three of these fractions and particularly advantageously at least the last-mentioned fraction being obtained.

9. Method according to Claim 8, **characterized in that**, as a result of the classification, at least 60% by weight, in particular at least 80% by weight of the heavy material fraction (HM_{H}) is obtained with a diameter of > 6 mm.

10. Method according to one of Claims 5 to 9, **characterized in that** in the main process (SR_{M}) the heavy material fraction (s) (HM_{L}, HM_{H}) is/are disintegrated by means of a crushing unit (CR_{M}1) and is/are split by a density separator (DS_{H}1) into the crude granulate fraction (granulate_{M}) and/or into an enriched, non-ferrous-metal-containing fraction (NF_{M}).

11. Method according to Claim 10, **characterized in that** an output of the crushing unit (CR_{M}1) is predefined at < 8 mm.

12. Method according to one of the preceding claims, **characterized in that** surface cleaning of the crude granulate fraction (granulate_{M}) takes place.

13. Method according to Claim 12, **characterized in that** a washed heavy-metal-enriched slurry fraction (NF_{slurry}) is separated.

14. Method according to one of Claims 2 to 13, **characterized in that** the cleaned granulate is dried in a drying unit (D_{V}) until a residual moisture of < 0.2% by weight.

15. Method according to Claim 14, **characterized in that**, after drying, a residual metal fraction (NF_{V}) is separated by means of a metal separator (MS_{V}).

16. Method according to one of Claims 2 to 15, **characterized in that** the electrostatic separation takes place by means of an electrostatic separator (ES_{V}).

17. Method according to one of the preceding claims, **characterized in that** the non-ferrous-metal-containing fraction(s) (NF_{X}) obtained in the separation in the refining process (R) is/are integrated, according to quantity and composition, into a reprocessing process for the non-ferrous-metal-containing fraction (NF).

18. Plant for reprocessing shredder residues of metal-containing waste, especially vehicle bodies, consisting of a shredder light fraction (SLF) and a non-ferromagnetic fraction (shredder heavy fraction (SHF)), **characterized in that** means are present with which
(a) during the reprocessing of the shredder light fraction (SLF) and of the shredder heavy fraction (SHF) in preliminary processes (Pre_{L}, Pre_{H}) and a common main process (SR_{M}), a crude granulate fraction (granulate_{M}) is produced by separation of at least a ferromagnetic fraction (Fe/V2A), a non-ferrous-metal-containing fraction (NF), a fluff fraction (fluff) and a sand fraction (sand), and
(b) a low-chlorine and low-metal: granulate fraction (granulateₚᵤᵣₑ) is separated from the crude granulate fraction (granulate_{M}) in a refining process (R).

19. Plant according to Claim 18, **characterized in that** a low-chlorine and low-metal granulate fraction (granulateₚᵤᵣₑ) and a heavy-metal-enriched slurry fraction (NF_{slurry}) are separated from the crude granulate fraction (granulate_{M}) in a refining process as a result of the process steps which follow one another of surface cleaning, drying and electrostatic separation into at least one chlorine-enriched granulate fraction (granulate_{PVC}).

20. Plant according to Claim 18 or 19, **characterized in that** a magnetic separator for separating ferromagnetic residual fractions from the shredder' light fraction (SLF) is present.

21. Plant according to one of Claims 18 to 20, **characterized in that** for the reprocessing of the pretreated shredder light fraction (SLF) in the preliminary process (Pre_{L}) there are successively provided
- a first crushing unit (CR_{L}1) for the disintegration of the shredder light fraction (SLF),
- at least one magnetic separator (PM_{L}1) for separating at least one ferromagnetic fraction (Fe, V2A) from a non-ferromagnetic fraction (NF_{L}),
- a second crushing unit (CR_{L}2) for disintegrating the non-ferromagnetic fraction (NF_{L}),
- at least one classifier (CL_{L}1) for the separation of a fine-grained sand fraction (Sand_{L}), and
- at least one density separator (DS_{L}1) for splitting the remaining fraction into the fluff fraction (fluff) and a coarse-grained heavy material fraction (HM_{L}).

22. Plant according to Claim 21, **characterized in that** a suction device (SU_{L}1) for the separation of a foamed plastic fraction (PU) is additionally provided.

23. Plant according to one of Claims 18 to 22, **characterized in that** for the reprocessing of the shredder heavy fraction (SHF) in the preliminary process (Pre_{H}) there are successively provided a metal separator (MS_{H}1) and at least one classifier (CL_{H}1) for the separation of at least one enriched, non-ferrous-metal-containing fraction (NF_{H}), a heavy material fraction (HM_{H}) and a fine-grained, low-metal sand fraction (Sand_{H}).

24. Plant according to one of Claims 18 to 23, **characterized in that** for the reprocessing of the material flows from the preliminary processes (Pre_{L}, Pre_{H}) in the main process (SR_{M}) there are provided
- means for combining the heavy material fractions (HM_{L}, HM_{H}) into a common heavy material fraction (HM),
- a crushing unit (CR_{M}1) for the disintegration of the heavy material fraction (HM), and
- subsequently a density separator (DS_{M}1) for separating the crude granulate fraction (granulate_{M}) and an enriched, non-ferrous-metal-containing fraction (NF_{H}) from the disintegrated heavy material fraction (HM).

25. Plant according to one of Claims 18 to 24, **characterized in that** the means for treating the crude granulate fraction (granulate_{M}) in the refining process (R) comprise at least one friction and turbowasher (W_{V}), one drying unit (D_{V}) and one electrostatic freefall separator (EFS_{V}).

26. Plant according to Claim 25, **characterized in that** a metal separator (MS_{V}) is provided in addition.

27. Plant according to Claim 26, **characterized in that** means are provided for feeding the non-ferrous-metal-containing fraction (NF_{R}) obtained in the separation in the refining process (R) into a reprocessing process for the non-ferrous-metal-containing fraction (NF).

28. Use of the method for reprocessing synthetic materials from shredder residues of metal-containing waste, especially vehicle bodies, according to one of Claims 1 to 17, **characterized in that** a low-chlorine and, in particular, also low-metal granulate fraction (granulateₚᵤᵣₑ) is separated for raw material recycling, for example for use as reducing agent in the blast furnace process.

29. Use according to Claim 28, **characterized in that** the granulate fraction (granulateₚᵤᵣₑ) has at least the first two of the following characteristics:
• a heat value of > 20 MJ/kg
• a Cl content of < 1.5% by weight
• a Zn content of < 0.5% by weight
• a Cu content of < 0.2% by weight
• a Pb content of < 0.1% by weight
• a Cd content of < 0.02% by weight.

## Revendications

1. Procédé de préparation de résidus de déchiquetage de déchets qui contiennent des métaux et en particulier les carrosseries de véhicule, notamment de vieilles automobiles et/ou d'automobiles accidentées, dans lequel les résidus de déchiquetage sont séparés en une fraction légère de déchiquetage (SLF) et une fraction non ferromagnétique (fraction lourde de déchiquetage (SSF)), **caractérisé en ce que** :
(a) pendant la préparation de la fraction légère de déchiquetage (SLF) et de la fraction lourde dé déchiquetage (SSF) dans des opérations préalables (Vor_{L}, Vor_{S}) et dans une opération principale commune (SR_{H}) on crée une fraction de granulés bruts (granulés_{H}) par séparation d'au moins une fraction ferromagnétique (Fe, V2A), d'une fraction (NF) qui contient des métaux non ferreux, d'une fraction de peluches (peluches) et d'une fraction de sable (sable) et
(b) on sépare de la fraction de granulés bruts (granulés_{H}), dans une opération d'affinage (V), une fraction de granulés pauvre en chlore et en métaux (granulésₚᵤᵣ).

2. Procédé selon la revendication 1, **caractérisé en ce que** la fraction de granulés bruts (granulés_{H}) est séparée dans une séparation électrostatique qui précède notamment un nettoyage de la surface et un séchage des granulés bruts.

3. Procédé selon la revendication 1 ou 2, **caractérisé en ce qu'**à partir de la fraction de granulés bruts (granulés_{H}), on sépare une fraction de granulés pauvre en chlore et notamment aussi en métaux (granuléspᵤᵣ) et avantageusement aussi une fraction de granulés enrichie en chlore (granulés_{PVC}) et/ou une fraction (de boues) enrichie en métaux lourds (NF_{boues}).

4. Procédé selon l'une quelconque des revendications précédentes, **caractérisé en ce que** la fraction légère de déchiquetage (SLF) subit un pré-traitement supplémentaire au moyen d'un séparateur magnétique en vue de séparer une fraction ferromagnétique résiduelle.

5. Procédé selon l'une quelconque des revendications précédentes, **caractérisé en ce que** dans l'opération préalable (Vor_{L}), partant de la fraction légère de déchiquetage (SLF), par déchiquetage, séparation des métaux, classification et/ou séparation en fonction de la masse spécifique, on sépare une fraction contenant du fer et/ou ferromagnétique (Fe, V2A), une fraction de sable fin (sable_{L}), une fraction de peluches (peluches) et/ou une fraction (SG_{L}) de produits lourds à grains grossiers, de préférence au moins deux, notamment au moins trois de ces fractions et en particulier avantageusement au moins la dernière fraction mentionnée étant obtenues.

6. Procédé selon la revendication 5, **caractérisé en ce qu'**à partir de la fraction légère de déchiquetage (SLF) dans l'opération préalable (Vor_{L}), on sépare de plus une fraction de mousse (PU) en particulier au moyen d'un dispositif d'aspiration (AB_{L}1).

7. Procédé selon la revendication 5 ou 6, **caractérisé en ce qu'**en particulier par le déchiquetage et/ou la classification on obtient au moins 60% en poids, notamment au moins 80% en poids de la fraction (SG_{L}) de produits lourds avec un diamètre de 4 à 10 mm.

8. Procédé selon l'une quelconque des revendications précédentes, **caractérisé en ce qu'**à partir de la fraction lourde de déchiquetage (SSF), au cours de' l'opération préalable (Vor_{S}) et par séparation des métaux, classification et/ou séparation en fonction de la masse spécifique, on sépare au moins une fraction (NF_{S}) qui contient des métaux non ferreux, une fraction de sable fin appauvri en métaux (sables), une fraction résiduelle à haute masse spécifique (rest) et/ou une fraction (SG_{S}) de produits lourds, de préférence au moins deux et notamment trois de ces fractions et en particulier avantageusement au moins la dernière fraction mentionnée étant obtenues.

9. Procédé selon la revendication 8, **caractérisé en ce que** l'on obtient par la classification au moins 60% en poids, notamment au moins 80% en poids de la fraction (SG_{S}) de produits lourds avec un diamètre > 6 mm.

10. Procédé selon l'une quelconque des revendications 5 à 9, **caractérisé en ce que** dans l'opération principale (SR_{H}), la ou les fractions de produits lourds (SG_{L}, SG_{S}) sont désagrégées au moyen d'une machine de déchiquetage (Z_{H}1) et sont séparées au moyen d'un dispositif (D_{H}1) de séparation en fonction de la masse spécifique en une fraction de granulés bruts (granulés_{H}) et/ou en une fraction qui contient des métaux non ferreux (NF_{H}).

11. Procédé selon la revendication. 10, **caractérisé en ce qu'**une décharge de la machine de déchiquetage (Z_{H}1) est prédéfinie de manière à être < 8 mm.

12. Procédé, selon l'une quelconque des revendications précédentes, **caractérisé en ce que** l'on effectue un nettoyage de la surface de la fraction de granulés bruts (granulés_{H}).

13. Procédé selon la revendication 12, **caractérisé en ce que** l'on sépare une fraction de boues enrichie en métaux lourds évacuée par lavage (NF_{boue}).

14. Procédé selon l'une quelconque des revendications 2 à 13, **caractérisé en ce que** le séchage des granulés nettoyés s'effectue dans une machine de séchage (T_{V}) jusqu'à une humidité résiduelle < 0,2 % en poids.

15. Procédé selon la revendication 14, **caractérisé en ce qu'**après le séchage on sépare une fraction de métaux résiduels (NF_{V}) au moyen d'un séparateur de métaux (MAv).

16. Procédé selon l'une quelconque des revendications 2. à 15, **caractérisé en ce que** la séparation électrostatique s'effectue au moyen d'un séparateur électrostatique (EF_{V}).

17. Procédé selon l'une quelconque des revendications précédentes, **caractérisé en ce que** la ou les fractions (NF_{V}) qui contiennent des métaux non ferreux et qui sont produites lors de la séparation au cours de l'opération d'affinage (V) sont intégrées en fonction de leur quantité et de leur composition dans une opération de traitement de la fraction (NF) qui contient des métaux non ferreux.

18. Installation de traitement de résidus de déchiquetage de déchets qui contiennent des métaux, en particulier de carrosseries, constitués d'une fraction légère de déchiquetage (SLF) et d'une fraction non ferromagnétique (fraction lourde de déchiquetage (SSF)), **caractérisée en ce qu'**elle présente des moyens avec lesquels :
(a) pendant la préparation de la fraction légère de déchiquetage (SLF) et de la fraction lourde de déchiquetage (SSF) dans des opérations préalables (Vor_{L}, Vor_{S}) et dans une opération principale commune (SR_{H}), on crée une fraction de granulés bruts (granuléS_{H}) par séparation d'au moins une fraction ferromagnétique (Fe/V2A), d'une fraction (NF) qui contient des métaux non ferreux, d'une fraction de peluches (peluches) et d'une fraction de sable (sable) et
(b) dans une opération d'affinage (V), on sépare de la fraction de granulés bruts (granulés_{H}) une fraction de granulés pauvre en chlore et en métaux (granulésₚᵤᵣ).

19. Installation selon la revendication 18, **caractérisée en ce qu'**à partir de la fraction de granulés bruts (granulés_{H}), dans l'opération d'affinage, on sépare, par les étapes de procédé successives de nettoyage de la surface, séchage et séparation électrostatique, au moins une fraction de granulés enrichie en chlore (granulés_{PVC}), une fraction de granulés pauvre en chlore et en métaux (granulésₚᵤᵣ) et une fraction de boues enrichies en métaux lourds (NF_{boue}).

20. Installation selon la revendication 18 ou 19, **caractérisée en ce qu'**un séparateur magnétique est prévu pour séparer des fractions résiduelles ferromagnétiques de la fraction légère de déchiquetage (SLF).

21. Installation selon l'une quelconque des revendications 18 à 20, **caractérisée en ce que** pour le traitement de la fraction légère de déchiquetage (SLF) prétraitée au cours de l'opération préalable (Vor_{L}), on prévoit successivement:
- une première machine de déchiquetage (Z_{L}1) qui décortique la fraction légère de déchiquetage (SLF),
- au moins un séparateur magnétique (PM_{L}1) qui sépare au moins une fraction ferromagnétique (Fe, V2A) d'une fraction non ferromagnétique (NF_{L}),
- une deuxième machine de déchiquetage (Z_{L}2) qui décortique la fraction non ferromagnétique (NF_{L}),
- au moins un dispositif de classification (K_{L}1) qui sépare une fraction de sable fin (sable_{L}) et
- au moins un dispositif (D_{L}1) de séparation en fonction de la masse spécifique qui sépare la fraction résiduelle en la fraction de peluches (peluches) et une fraction (SG_{L}) de produits lourds à grains grossiers.

22. Installation selon la revendication 21, **caractérisée en ce qu'**elle présente de plus un dispositif d'aspiration (AB_{L}1) qui sépare une fraction de mousse (PU).

23. Installation selon l'une quelconque des revendications 18 à 22, **caractérisée en ce que** pour traiter la fraction lourde de déchiquetage (SSF) dans l'opération préalable (Vor_{S}), on prévoit successivement un séparateur de métaux (MA_{S}1) et au moins un dispositif de classification (K_{S}1) qui séparent au moins une fraction (NF_{S}) qui est enrichie en métaux non ferreux, une fraction (SG_{S}) de produits lourds et une fraction de sable fin appauvri en métaux (sables).

24. Installation selon l'une quelconque des revendications 18 à 23, **caractérisée en ce que** pour traiter les écoulements de matière qui proviennent des opérations préalables (Vor_{L}, Vor_{S}), on prévoit dans l'opération principale (SR_{H}):
- des moyens qui rassemblent les fractions (SG_{L}, SG_{S}) de produits lourds en une fraction commune (SG) de produits lourds,
- une machine de déchiquetage (Z_{H}1) qui décortique la fraction (SG) de produits lourds et ensuite
- un dispositif (D_{H}1) de séparation en fonction de la masse spécifique qui sépare la fraction des granulés bruts (granulés_{H}) et une fraction (NF_{H}) qui contient des métaux non ferreux de la fraction décortiquée (SG) de produits lourds.

25. Installation selon l'une quelconque des revendications 18 à 24, **caractérisée en ce que** les moyens de traitement de la fraction de granulés bruts (granulés_{H}) dans l'opération d'affinage (V) comprennent au moins un turbolaveur à friction (W_{V}), une machine de séchage (T_{V}) et un séparateur à chute libre électrostatique (EF_{V}).

26. Installation selon' la revendication 25, **caractérisée en ce que** l'on prévoit en outre un séparateur de métaux (MA_{V}).

27. Installation selon la revendication 26, **caractérisée en ce qu'**elle présente des moyens, d'entreposage de la fraction (NF_{V}) qui contient des métaux non ferreux et qui est produite lors de la séparation au cours de l'opération d'affinage (V) dans une opération de traitement de la fraction (NF) qui contient des métaux non ferreux.

28. Utilisation du procédé de traitement de matières synthétiques provenant de déchets métallifères de résidus de déchiquetage, en particulier de carrosseries, selon l'une des revendications 1 à 17, **caractérisée en ce que** l'on sépare une fraction de granulés pauvre en chlore et en particulier en métaux (granulésₚᵤᵣ) pour l'utiliser comme matière première, par exemple pour l'utilisation en tant qu'agent réducteur dans un processus de hauts-fourneaux.

29. Utilisation selon la revendication 28, **caractérisée en ce que** la fraction de granulés (granulésₚᵤᵣ) présente au moins les deux premières des caractéristiques suivantes :
- une valeur thermique > 20 MJ/kg
- une teneur en Cl < 1,5% en poids,
- une teneur en Zn < 0,5% en poids,
- une teneur en Cu < 0,2% en poids,
- une teneur en Pb < 0,1% en poids, et
- une teneur en Cd < 0,02% en poids.
